# EUROPEAN PATENT SPECIFICATION

(11) **EP 3 133 208 B1**
(45) Date of publication and mention of the grant of the patent: **24.11.2021**
(21) Application number: 16183281.1
(22) Date of filing: 09.08.2016
(51) Int. Cl.: E02B 3/26, B63B 59/02, F16F 1/36

(54) **FENDER DEVICE**
FENDERVORRICHTUNG
DISPOSITIF DE GARDE-BOUE

(30) Priority: 18.08.2015 JP 2015161241
(43) Date of publication of application: 22.02.2017
(73) Proprietor: SUMITOMO RUBBER INDUSTRIES LIMITED, Kobe-shi, Hyogo-ken (JP)
(72) Inventor: TERADA, Takashi, Kobe-shi, Hyogo 651-0072 (JP); TSUJI, Tomohiro, Kobe-shi, Hyogo 651-0072 (JP)
(74) Representative: Manitz Finsterwald Patent- und Rechtsanwaltspartnerschaft mbB

(56) References cited:
- DE-U- 1 838 120
- FR-A6- 2 232 943
- JP-A- 2013 028 908
- JP-Y1- S4 922 718
- US-A- 3 999 497

## Description

### FIELD OF INVENTION

The present invention relates to a fender device for protecting a marine vessel when berthing.

### BACKGROUND

A fender device is sometimes provided on a berthing face of a quay, a pier, or the like in order to reduce impact when a marine vessel comes up along the berthing face. There are various types of fender devices, and one of them is a fender device in which an impact receiving plate that comes into contact with a marine vessel is coupled to the berthing face via a buffer member. In general, this type of buffer member is made of an elastic material such as rubber, is capable of undergoing compressive deformation, and absorbs impact energy when the impact receiving plate is pressed toward the berthing face due to contact with a marine vessel. This makes it possible to avoid damage to the marine vessel and the berthing face.

JP 2013-28908A (hereinafter referred to as "patent Literature 1") discloses the above type of fender device. In the fender device disclosed in Patent Literature 1, two buffer members between which a spacer is sandwiched are provided between the berthing face and the impact receiving plate. A columnar stopper for preventing excessive compression of the buffer member is provided on the impact receiving plate side of the spacer. The stopper extends so as to project from the spacer toward the impact receiving plate.

### SUMMARY of INVENTION

The stopper described in Patent Literature 1 needs to have a certain length in the compression direction for the purpose of preventing excessive compression of the buffer member, and has a certain weight because the stopper is made of a steel material or the like. Moreover, the stopper described in Patent Literature 1 extends so as to project from the spacer toward the impact receiving plate, and repeatedly receives impact energy from a marine vessel via the impact receiving plate. Therefore, it is desired that the durability of the stopper is further improved such that the stopper does not drop off.

Prior art fender devices are disclosed in the documents US 3 999 497, DE 18 38 120 U, FR 2 232 943, and JP S49 22718 Y.

An object of the present invention is to provide a fender device equipped with a highly durable stopper for preventing excessive compression of a buffer member.

The invention is defined in claim 1. Preferred embodiments are presented in dependent claims 2-7. A fender device according to a first aspect of the present invention is a fender device to be attached to a berthing face alongside which a marine vessel comes, the fender device including an impact receiving member configured to come into contact with the marine vessel, a buffer member, and a stopper. The buffer member is arranged between the impact receiving member and the berthing face, is made of an elastic material, and is capable of undergoing compressive deformation in a normal direction orthogonal to the berthing face. The stopper includes a stopper main body. The stopper main body is arranged between the impact receiving member and the berthing face so as to extend in the normal direction in order to prevent excessive compression of the buffer member. A cavity is formed inside the stopper main body. The stopper main body includes a first end portion and a second end portion in the normal direction and is fixed to the impact receiving member or the berthing face on the first end portion side, and the stopper further includes a cover for closing the cavity on the second end portion side of the stopper main body. At least an outermost surface of the cover is made of rubber or resin.

It should be noted that "extending in a normal direction" described herein includes extending in parallel with the normal direction or substantially in parallel with the normal direction as well as extending obliquely with respect to the normal direction.

A fender device according to a second aspect of the present invention is the fender device according to any of the first aspect to the third aspect, wherein the stopper main body is a cylinder having a central axis extending in the normal direction.

A fender device according to a third aspect of the present invention is the fender device according to the first aspect to the fourth aspect, wherein the stopper main body is made of a steel material.

A fender device according to a fourth aspect of the present invention is the fender device according to the first aspect to the fifth aspect, wherein the stopper main body is fixed to the impact receiving member or the berthing face by welding or using a fastening member.

A fender device according to a fifth aspect of the present invention is the fender device according to the first aspect to the sixth aspect, wherein the buffer member defines an internal space between the impact receiving member and the berthing face, and the stopper is arranged inside the internal space.

A fender device according to an sixth aspect of the present invention is the fender device according to the first aspect to the seventh aspect, wherein the stopper is configured so as not to come into contact with the buffer member when the marine vessel comes into contact with the impact receiving member and the buffer member undergoes deformation such that the impact receiving member forms a design berthing angle with respect to the berthing face.

A fender device according to a seventh aspect of the present invention is the fender device according to the first aspect to the sixth aspect, wherein a ratio L1/D1 of a length L1 of the stopper in the normal direction with respect to a diameter D1 of a cross section, which is orthogonal to the normal direction, of the stopper main body is more than 1.

With the first aspect, a stopper for preventing excessive compression of a buffer member is arranged between a berthing face of a quay, pier, or the like and an impact receiving member of a fender device. A cavity is formed inside a stopper main body of the stopper. Therefore, the weight of the stopper is reduced, and thus the problem of the stopper dropping off is unlikely to occur even if the stopper repeatedly receives impact energy from a marine vessel. As a result, the durability of the stopper is improved.

### BRIEF DESCRIPTION OF DRAWINGS

FIG. 1 is a lateral cross-sectional view showing a state in which a fender device according to an embodiment of the present invention is installed on a berthing face.
FIG. 2 is a perspective view of a buffer member.
FIG. 3 is a lateral cross-sectional view showing a state in which the buffer member undergoes maximum compressive deformation in a normal direction of the berthing face in the fender device shown in FIG. 1.
FIG. 4 is a lateral cross-sectional view of a stopper.
FIG. 5 is a lateral cross-sectional view showing a state in which the buffer member undergoes deformation such that an impact receiving member forms a design berthing angle with respect to the berthing face in the fender device shown in FIG. 1.
FIG. 6 is a lateral cross-sectional view showing a state in which a fender device according to a modified example is installed on the berthing face.
FIG. 7 is a lateral cross-sectional view showing a state in which a fender device according to another modified example is installed on the berthing face.
FIG. 8 is a lateral cross-sectional view of a stopper according to yet another modified example.

### DETAILED DESCRIPTION OF THE PREFERRED EMBODIMENTS

Hereinafter, a fender device according to an embodiment of the present invention will be described with reference to the drawings. Although there are fender devices having various shapes such as a cylindrical shape, a pi shape, and an arch shape, an example in which the present invention is applied to a cylindrical fender device will be described hereinafter.

### 1. First embodiment

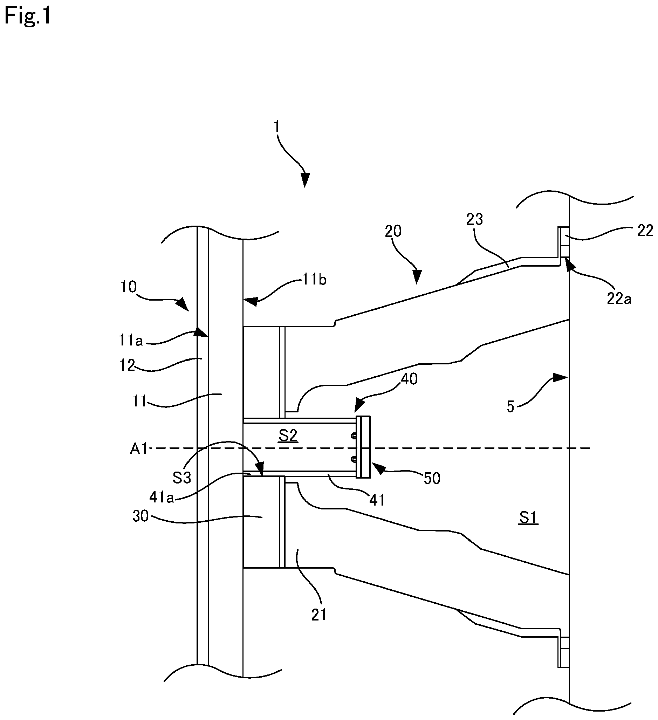

FIG. 1 is a lateral cross-sectional view of a fender device 1 according to this embodiment. The fender device 1 is attached to a berthing face 5 of a quay, a pier, or the like that a marine vessel comes up along, and reduces impact when the marine vessel comes up along the berthing face 5. The fender device 1 includes an impact receiving member 10 that comes into direct contact with a lateral surface or the like of the marine vessel, and a buffer member 20 between the impact receiving member 10 and the berthing face 5. During berthing of a marine vessel, the buffer member 20 absorbs energy applied to the impact receiving member 10 due to collision with the marine vessel by undergoing compressive deformation between the impact receiving member 10 and the berthing face 5, thus making it possible to protect both the marine vessel and the berthing face 5. FIG. 1 shows the fender device 1 in a normal state in which no external force is applied to the impact receiving member 10.

In this embodiment, the impact receiving member 10 includes an impact receiving plate 11 made of a steel material, and a surface member 12 made of a material having lower rigidity is fixed to an outer surface 11a on the marine vessel side of the impact receiving plate 11 in order to prevent damage to the marine vessel. Typically, the surface member 12 is made of rubber or resin. The impact receiving plate 11 is installed in parallel with or substantially in parallel with the berthing face 5. It should be noted that although not only the impact receiving plate 11 portion of the impact receiving member 10 but the entire impact receiving member 10 has a plate shape, there is no limitation on the shape of the impact receiving member 10 as long as it can appropriately catch the lateral surface or the like of the marine vessel. Moreover, the material of the impact receiving plate 11 is not limited to a steel material, and the impact receiving plate 11 may be made of another metal or can be made of resin or ceramic as long as rigidity suitable for the impact receiving plate function can be secured. It should be noted that the surface member 12 can be omitted.

The buffer member 20 is arranged on the berthing face 5 side with respect to the impact receiving plate 11. More specifically, the buffer member 20 is attached to a spacer 30 on a back surface 11b side of the impact receiving plate 11 such that the spacer 30 is sandwiched between the buffer member 20 and the impact receiving plate 11. The spacer 30 according to this embodiment is a ring-shaped member, and the central axis thereof extends in parallel with or substantially in parallel with a normal direction (referred to as "A1 direction" hereinafter) that is orthogonal to the berthing face 5. The spacer 30 is directly coupled to the back surface 11b of the impact receiving plate 11. Although a coupling mode can be selected as appropriate, typically, the spacer 30 can be coupled to the impact receiving plate 11 by welding and/or using a fastening member such as a bolt. It should be noted that in another embodiment, the spacer 30 can be omitted, and the impact receiving plate 11 and the buffer member 20 can be directly coupled to each other. However, the spacer 30 has the function of increasing the amount of compressive deformation of the buffer member 20 and in turn enabling the buffer member 20 to absorb more impact energy from the marine vessel, and in this regard, it is preferable to provide the spacer 30. Although the spacer 30 is made of a steel material in this embodiment, there is no particular limitation on the material of the spacer 30, and the spacer 30 may be made of another metal or can be made of resin or ceramic as long as rigidity suitable for the spacer function can be secured.

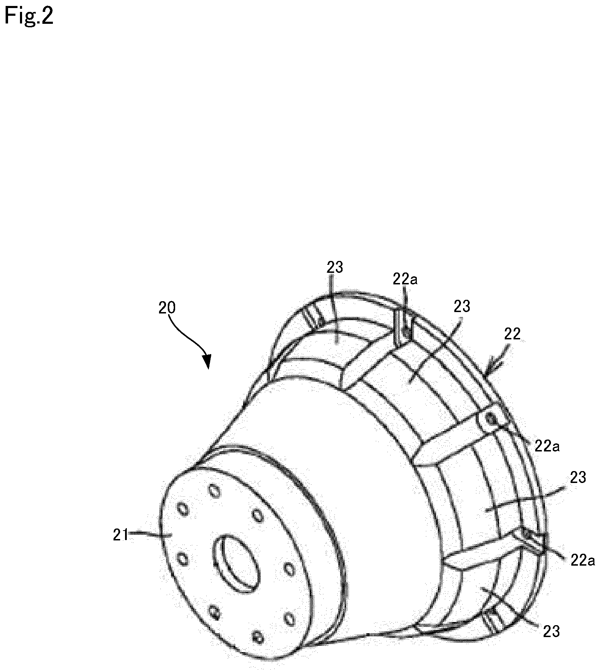

The buffer member 20 according to this embodiment is directly coupled to the berthing face 5 side of the spacer 30. Although a coupling mode can be selected as appropriate, typically, the buffer member 20 can be coupled to the spacer 30 by using a fastening member such as a bolt. For example, the buffer member 20 can be coupled to the spacer 30 by inserting a bolt into a bolt hole, which is provided in the spacer 30, having no screw thread and fixing this bolt with a cap nut embedded inside the buffer member 20. FIG. 2 is a perspective view of the buffer member 20. As shown in FIG. 1 and FIG. 2, the external shape of the buffer member 20 is a substantially truncated cone shape having a central axis extending in parallel with or substantially in parallel with the A1 direction, and as shown in FIG. 1, the buffer member 20 has a tubular shape having an internal space S1. In other words, the buffer member 20 is a tubular member whose diameter gradually increases toward the berthing face 5 side from the impact receiving plate 11 side in the A1 direction. However, as shown in FIG. 1 and FIG. 2, the diameter of an end portion 21 on the impact receiving plate 11 side does not increase in the A1 direction and has a cylindrical shape, and an end surface on the impact receiving plate 11 side of this end portion 21 is directly coupled to the spacer 30. On the other hand, an end portion on the berthing face 5 side constitutes a flange portion 22. Moreover, as shown in FIG. 1, the buffer member 20 has a substantially constant thickness.

The flange portion 22 has a thin ring shape, and an end surface on the berthing face 5 side of the flange portion 22 is directly coupled to the berthing face 5. In general, the berthing face 5 is made of concrete. Therefore, the flange portion 22 is provided with through holes 22a extending in parallel with or substantially in parallel with the A1 direction at a plurality of positions in a circumferential direction, and fastening members such as bolts are inserted into the berthing face 5 through these through holes 22a. The fender device 1 is thereby firmly fixed to the berthing face 5. Since the through holes 22a serve to fix the fender device 1 to the berthing face 5 in this manner, it is preferable that the through holes 22a are arranged at regular intervals in the circumferential direction in order to uniformly disperse the external force applied to the fender device 1. Moreover, a plurality of projecting portions 23 that are arranged in the circumferential direction and project outward in a radial direction are formed at positions near the flange portion 22 in the A1 direction of an outer circumferential surface of the buffer member 20. The projecting portions 23 and the through holes 22a are alternately arranged in the circumferential direction. When the buffer member 20 is attached to the berthing face 5, the internal space S1, which is substantially closed, is defined by the buffer member 20, the berthing face 5, the spacer 30, and the impact receiving plate 11. To some extent, sea water may infiltrate into the internal space S1 through the positions at which the buffer member 20 is attached to the berthing face 5.

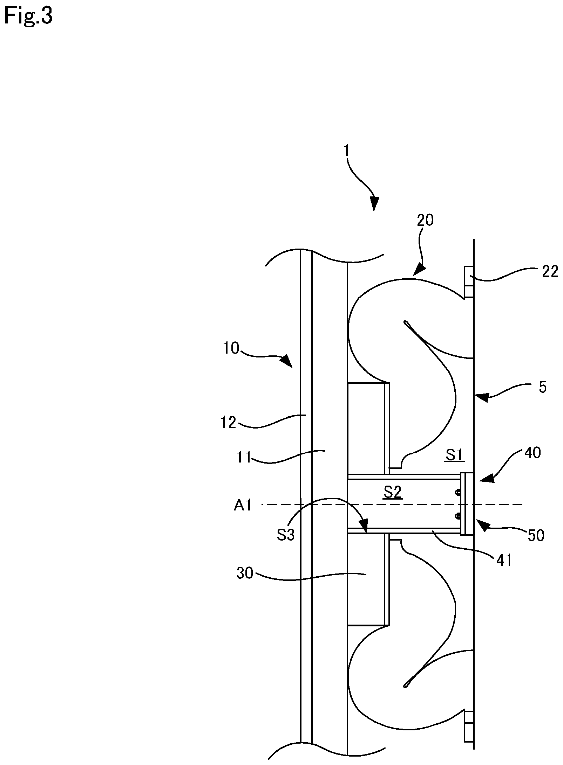

The buffer member 20 is made of an elastic material and can receive energy from a collision with a marine vessel and undergo compressive deformation in the A1 direction. Although there is no limitation on the material of the buffer member 20 as long as elasticity suitable for the buffer member function can be secured, typically, the buffer member 20 is made of rubber, and rubber having various compositions can be used. FIG. 3 shows the fender device 1 in a state, being changed from the normal state shown in FIG. 1, in which an external force in the A1 direction is applied to the impact receiving plate 11 and the buffer member 20 thereby undergoes compressive deformation in the A1 direction. The above-described projecting portions 23 serve to cause the buffer member 20 to undergo compressive deformation so as to have a certain shape when a compressive force in the A1 direction is applied to the buffer member 20, and can stabilize the amount of energy that can be absorbed due to the compressive deformation. It is preferable that the projecting portions 23 are also arranged at regular intervals in the circumferential direction.

Incidentally, in general, the greater the amount of compression of the buffer member 20, the greater the amount of energy that is absorbed. However, if a load that is equal to or greater than the amount of compression guaranteed by the buffer member 20 is applied, the buffer member 20 may be damaged. Therefore, in order to prevent such excessive compression, a stopper 40 is provided in the fender device 1.

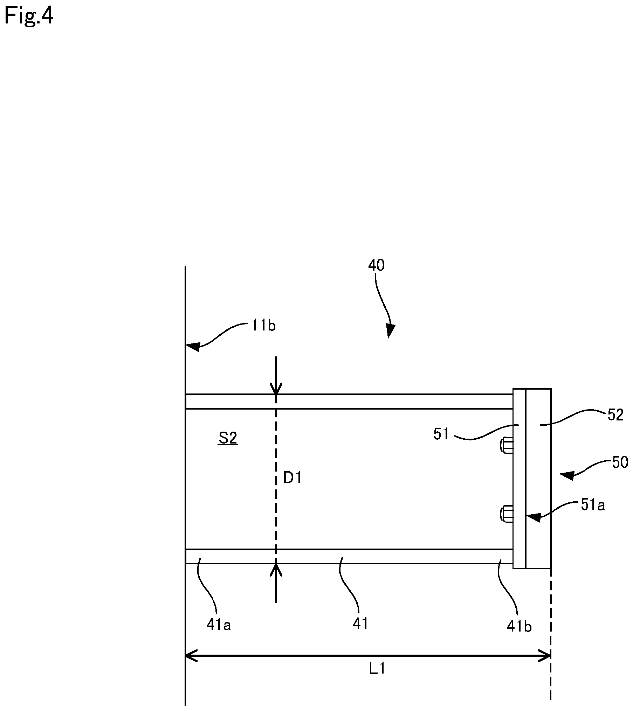

FIG. 4 is a lateral cross-sectional view of the stopper 40. As shown in FIG. 1 and FIG. 4, the stopper 40 according to this embodiment includes a stopper main body 41 that is arranged between the impact receiving plate 11 and the berthing face 5. The stopper main body 41 is a cylinder or a cylindrical hollow having a central axis extending in the A1 direction. That is, a cavity S2 is formed inside the stopper main body 41. In this embodiment, the stopper 40 is arranged inside the internal space S1 formed inside the buffer member 20. More specifically, a first end portion 41a on the impact receiving plate 11 side of the stopper main body 41 in the A1 direction is inserted into a circular opening S3 at the center of the ring-shaped spacer 30. The first end portion 41a is fixed to the back surface 11b of the impact receiving plate 11, and the impact receiving plate 11 side of the cavity S2 is thereby closed. In this embodiment, the diameter of a cross section, which is orthogonal to the A1 direction, of the circular opening S3 of the spacer 30 is substantially the same as a diameter D1 of a cross section, which is orthogonal to the A1 direction, of the stopper main body 41.

Although the stopper main body 41 is made of a steel material in this embodiment, there is no particular limitation on the material of the stopper main body 41, and the stopper main body 41 may be made of another metal or can be made of resin, ceramic, rubber, or the like as long as rigidity suitable for the stopper function (details will be described later) can be secured. Moreover, a mode for coupling the impact receiving plate 11 and the first end portion 41a can be selected as appropriate. For example, although it is preferable that the impact receiving plate 11 and the first end portion 41a are coupled to each other by welding because they can be connected to each other so as to achieve hermetic sealing, the impact receiving plate 11 and the first end portion 41a can also be coupled to each other by using a fastening member such as a bolt.

A cover 50 for closing the berthing face 5 side of the cavity S2 is attached to a second end portion 41b on the berthing face 5 side of the stopper main body 41 in the A1 direction. The cover 50 according to this embodiment includes a disk 51 facing the cavity S2, and a surface member 52 that similarly has a disk shape and covers the entirety of an end surface 51a on the outside of the disk 51. Although there is no particular limitation on the material of the disk 51, the disk 51 is made of a steel material in this embodiment, and the disk 51 can be coupled to the stopper main body 41 by welding and/or using a fastening member such as a bolt. It should be noted that a configuration that prevents corrosion of the inside of the stopper main body 41 due to the infiltration of sea water into the cavity S2 is preferable, and in this regard, welding is a better method for coupling the stopper main body 41 and the cover 50. The same applies to a method for coupling the stopper main body 41 and the impact receiving plate 11. Regarding the outer surface of the stopper main body 41 as well, it is preferable to take rust prevention measures such as plating.

The surface member 52 is made of an elastic material having lower rigidity than the disk 51 has, and is made of rubber or resin. It should be noted that the surface member 52 serves to reduce the impact of collision between the cover 50 and the berthing face 5 when the buffer member 20 undergoes compressive deformation. Therefore, the surface member 52, which exhibits such a buffer function, is provided in any case, and in particular in the case where the disk 51 is made of a material having high rigidity, such as a steel material. Although there is no limitation on a mode for coupling the disk 51 and the surface member 52, they can be coupled to each other with a fastening member such as a bolt that passes through both of them.

The stopper 40 according to this embodiment is elongated in the A1 direction, and a ratio L1/D1 of a length L1 of the stopper 40 in the A1 direction with respect to the diameter D1 of a cross section, which is orthogonal to the A1 direction, of the stopper main body 41 satisfies a relationship L1/D1>1 in this embodiment. The ratio may satisfy a relationship L1/D1>1.5 or L1/D1>2. The value of L1/D1 is determined as appropriate in accordance with a design maximum amount of compression of the buffer member 20 in the A1 direction, or the like.

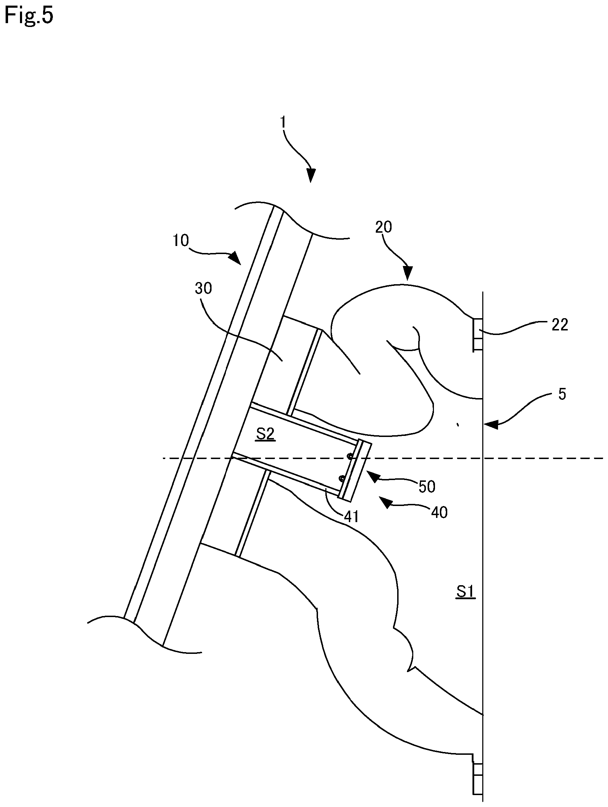

Hereinafter, the buffer member 20 undergoing compressive deformation at collision with a marine vessel will be described with reference to FIG. 3 and FIG. 5. First, when the marine vessel presses the impact receiving member 10 in the A1 direction, the buffer member 20 undergoes compressive deformation such that the cross section in the circumferential direction has an S shape as shown in FIG. 3. At this time, the stronger the collision force of the marine vessel is, the greater the amount of compression of the buffer member 20 in the A1 direction is, and when the amount of compression reaches a certain level, the cover 50 of the stopper 40 comes into contact with the berthing face 5. Moreover, since the stopper main body 41 is made of a material having higher rigidity than the buffer member 20 has, and in particular, is made of a steel material in this embodiment, the stopper 40 rarely undergoes compressive deformation in the A1 direction. Accordingly, the stopper 40 serves as an obstacle, the impact receiving plate 11 cannot approach the berthing face 5 such that the distance therebetween is equal to or shorter than the length L1 of the stopper 40, and thus the amount of compression of the buffer member 20 is limited by the stopper 40. Moreover, in this embodiment, a contact surface of the stopper 40 that comes into contact with the berthing face 5 is the disk-shaped cover 50. Therefore, impact with the berthing face 5 can be received by a large surface.

On the other hand, FIG. 5 shows a state of deformation of the buffer member 20 in a case where a marine vessel has obliquely collided with the impact receiving member 10 and the impact receiving member 10 has moved so as to form a design berthing angle with respect to the berthing face 5. The design berthing angle is an angle that is formed by the impact receiving member 10 with respect to the berthing face 5 and guarantees no damage to the buffer member 20 and a predetermined performance value as long as the buffer member 20 undergoes deformation such that the angle of the impact receiving member 10 with respect to the berthing face 5 is equal to or smaller than said angle. The design berthing angle is one design value, is determined by the manufacturer in advance, and may be written in a catalog and the like. As shown in FIG. 5, in the fender device 1 according to this embodiment, even the outer circumferential surface of the cover 50 of the stopper 40 does not come into contact with the inner circumferential surface of the buffer member 20 in a state in which the impact receiving member 10 forms the design berthing angle with respect to the berthing face 5. Therefore, damage to the buffer member 20 due to contact or friction with the outer circumferential edge portion of the cover 50 is suppressed.

### 2. Modified example

Although an embodiment of the present invention has been described above, the present invention is not limited to the above embodiment, and various modifications can be carried out without departing from the gist of the invention. For example, the following modifications can be carried out. Moreover, the features of the following modified examples can be combined as appropriate.

### 2-1

Although the stopper 40 has a cylindrical shape in the above embodiment, the stopper 40 can be configured to have any shape inside which a cavity is formed. The stopper 40 can be configured to have a honeycomb structure, for example. Moreover, the cavity does not necessarily have to reach an end portion of the stopper main body 41. In another example, one or more cavities having various shapes such as a spherical shape and a rectangular parallelepiped shape may be formed inside the stopper 40.

### 2-2

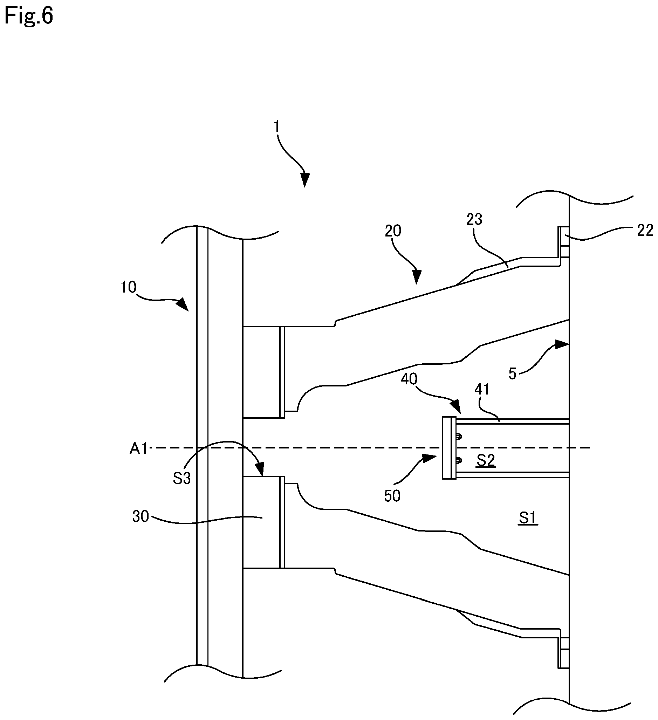

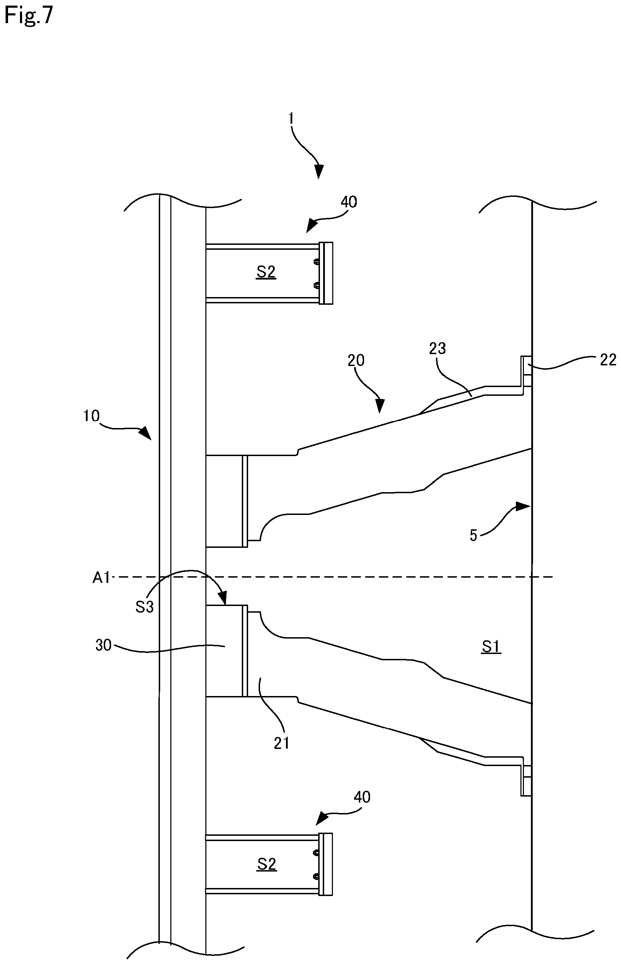

The attachment position of the stopper 40 is not limited to the position described above. For example, as shown in FIG. 6, the stopper main body 41 can be fixed to the berthing face 5 inside the internal space S1 of the buffer member 20. As shown in FIG. 7, the stopper 40 can also be installed outside the internal space S1 of the buffer member 20. Also in this case, the attachment position of the stopper main body 41 may be located on the impact receiving plate 11 or the berthing face 5.

Although there are fender devices having various shapes such as a pi shape and an arch shape, other than a cylindrical shape, it is natural that a similar stopper for preventing contact between the impact receiving member and the berthing face can be provided in such a fender device having a shape other than a cylindrical shape.

2-3

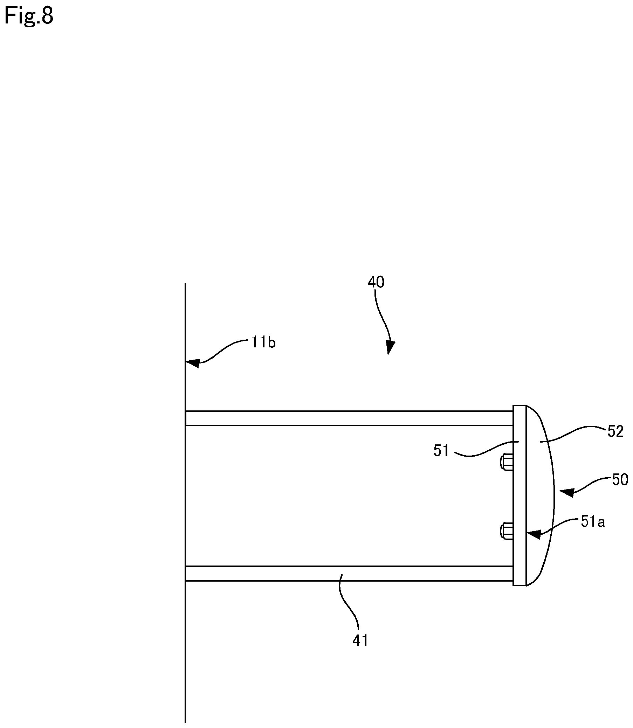

Although the surface member 52 of the cover 50 has a short columnar shape in the above embodiment, the surface member 52 may be formed in, as a whole, a disk shape whose central portion bulges out by rounding the outer circumferential edge portion as shown in FIG. 8. In this case, it is possible to more effectively suppress damage to the buffer member 20 due to contact or friction with the outer circumferential portion of the surface member 52.

### Reference Signs List

- 1: Fender device
- 5: Berthing face
- 10: Impact receiving member
- 20: Buffer member
- 30: Spacer
- 40: Stopper
- 41: Stopper main body
- 41a: First end portion
- 41b: Second end portion
- 50: Cover
- S1: Internal space
- S2: Cavity

## Claims

1. A fender device (1) to be attached to a berthing face (5) alongside which a marine vessel comes, the fender device (1) comprising:
an impact receiving member (10) configured to come into contact with the marine vessel;
a buffer member (20) that is arranged between the impact receiving member (10) and the berthing face (5), is made of an elastic material, and is capable of undergoing compressive deformation in a normal direction (A1) orthogonal to the berthing face (5); and
a stopper (40) that includes a stopper main body (41) arranged between the impact receiving member (10) and the berthing face (5) so as to extend in the normal direction (A1) in order to prevent excessive compression of the buffer member,
wherein a cavity is formed inside the stopper main body (41),
wherein
the stopper main body (41) includes a first end portion (41a) and a second end portion (41b) in the normal direction (A1) and is fixed to the impact receiving member (10) or the berthing face (5) on the first end portion side,
**characterized in that** the stopper (40) further includes a cover (50) for closing the cavity (S2) on the second end portion side (41b) of the stopper main body (41), and
**in that** at least an outermost surface (52) of the cover (50)is made of rubber or resin.

2. The fender device (1) according to claims 1,
wherein the stopper main body (41) is a cylinder having a central axis extending in the normal direction (A1).

3. The fender device (1) according to any of claims 1 and 2,
wherein the stopper main body (41) is made of a steel material.

4. The fender device (1) according to any of claims 1 to 3,
wherein the stopper main body (41) is fixed to the impact receiving member (10) or the berthing face (5) by welding or using a fastening member.

5. The fender device (1) according to any of claims 1 to 4,
wherein the buffer member (20) defines an internal space (S1) between the impact receiving member (10) and the berthing face (5), and the stopper (40) is arranged inside the internal space (S1).

6. The fender device (1) according to any of claims 1 to 5,
wherein the stopper (40) is configured so as not to come into contact with the buffer member (20) when the marine vessel comes into contact with the impact receiving member (10) and the buffer member (20) undergoes deformation such that the impact receiving member (10) forms a design berthing angle with respect to the berthing face (5).

7. The fender device (1) according to any of claims 1 to 6,
wherein a ratio L1/D1 of a length L1 of the stopper (40) in the normal direction (A1) with respect to a diameter D1 of a cross section, which is orthogonal to the normal direction (A1), of the stopper main body (41) is more than 1.

## Patentansprüche

1. Fendervorrichtung (1) zur Befestigung an einer Anlegefläche (5), an der ein Wasserfahrzeug längsseits kommt, wobei die Fendervorrichtung (1) umfasst:
ein Aufprallaufnahmeelement (10), das so gestaltet ist, dass es mit dem Wasserfahrzeug in Kontakt kommt;
ein Pufferelement (20), das zwischen dem Aufprallaufnahmeelement (10) und der Anlegefläche (5) angeordnet ist, aus einem elastischen Material besteht und in der Lage ist, eine Druckverformung in einer normalen Richtung (A1) orthogonal zu der Anlegefläche (5) zu erfahren; und
einen Stopper (40), der einen Stopperhauptkörper (41) umfasst, der zwischen dem Aufprallaufnahmeelement (10) und der Anlegefläche (5) so angeordnet ist, dass er sich in der normalen Richtung (A1) erstreckt, um eine übermäßige Kompression des Pufferelements zu verhindern,
wobei im Inneren des Stopperhauptkörpers (41) ein Hohlraum gebildet ist,
wobei der Stopperhauptkörper (41) einen ersten Endabschnitt (41a) und einen zweiten Endabschnitt (41b) in der normalen Richtung (A1) aufweist und an der Seite des ersten Endabschnitts an dem Aufprallaufnahmeelement (10) oder der Anlegefläche (5) befestigt ist,
**dadurch gekennzeichnet, dass**
der Stopper (40) ferner eine Abdeckung (50) zum Verschließen des Hohlraums (S2) auf der Seite des zweiten Endabschnitts (41b) des Stopperhauptkörpers (41) aufweist, und
dass mindestens eine äußerste Oberfläche (52) der Abdeckung (50) aus Gummi oder Harz besteht.

2. Fendervorrichtung (1) nach Anspruch 1, wobei der Stopperhauptkörper (41) ein Zylinder mit einer sich in der normalen Richtung (A1) erstreckenden Mittelachse ist.

3. Fendervorrichtung (1) nach einem der Ansprüche 1 und 2, wobei der Stopperhauptkörper (41) aus einem Stahlmaterial besteht.

4. Fendervorrichtung (1) nach einem der Ansprüche 1 bis 3, wobei der Stopperhauptkörper (41) durch Schweißen oder unter Verwendung eines Befestigungselements an dem Stoßaufnahmeelement (10) oder der Anlegefläche (5) befestigt ist.

5. Fendervorrichtung (1) nach einem der Ansprüche 1 bis 4, wobei das Pufferelement (20) einen Innenraum (S1) zwischen dem Stoßaufnahmeelement (10) und der Anlegefläche (5) definiert und der Stopper (40) innerhalb des Innenraums (S1) angeordnet ist.

6. Fendervorrichtung (1) nach einem der Ansprüche 1 bis 5, wobei der Stopper (40) so konfiguriert ist, dass er nicht mit dem Pufferelement (20) in Berührung kommt, wenn das Wasserfahrzeug mit dem Aufprallaufnahmeelement (10) in Berührung kommt und das Pufferelement (20) eine solche Verformung erfährt, dass das Aufprallaufnahmeelement (10) einen Konstruktionsanlegewinkel in Bezug auf die Anlegefläche (5) bildet.

7. Fendervorrichtung (1) nach einem der Ansprüche 1 bis 6, wobei ein Verhältnis L1/D1 einer Länge L1 des Stoppers (40) in der normalen Richtung (A1) in Bezug auf einen Durchmesser D1 eines Querschnitts, der orthogonal zu der normalen Richtung (A1) ist, des Stopperhauptkörpers (41) größer als 1 ist.

## Revendications

1. Dispositif pare-choc (1) qu'il s'agit d'attacher à une face d'amarrage (5) le long de laquelle un navire accoste, le dispositif pare-choc (1) comprenant :
un élément de réception d'impact (10) configuré pour venir en contact avec le navire ;
un élément tampon (20), qui est agencé entre l'élément de réception d'impact (10) et la face d'amarrage (5), est fait d'un matériau élastique et
est capable de subir une déformation de compression dans une direction normale (A1) orthogonale à la face d'amarrage (5) ; et
un moyen d'arrêt (40) qui inclut un corps principal (41) de moyen d'arrêt agencé entre l'élément de réception d'impact (10) et la face d'amarrage (5) de manière à s'étendre dans la direction normale (A1) afin d'empêcher une compression excessive de l'élément tampon,
dans lequel une cavité formée à l'intérieur du corps principal (41) de moyen d'arrêt,
dans lequel le corps principal (41) de moyen d'arrêt inclut une première portion d'extrémité (41a) et une seconde portion d'extrémité (41b) dans la direction normale (A1) et est fixé à l'élément de réception d'impact (10) ou à la phase d'amarrage (5) sur le côté de la première portion d'extrémité,
**caractérisé**
**en ce que** le moyen d'arrêt (40) inclut en outre une couverture (50) destinée à fermer la cavité (S2) sur le côté de la seconde portion d'extrémité (41b) du corps principal (41) de moyen d'arrêt, et
**en ce qu'**au moins une surface la plus à l'extérieur (52) de la couverture (50) est faite de caoutchouc ou de résine.

2. Dispositif pare-choc (1) selon la revendication 1,
dans lequel le corps principal (41) de moyen d'arrêt est un cylindre ayant un axe central s'étendant dans la direction normale (A1).

3. Dispositif pare-choc (1) selon l'une quelconque des revendications 1 et 2,
dans lequel le corps principal (41) de moyen d'arrêt est fait d'un matériau en acier.

4. Dispositif pare-choc (1) selon l'une quelconque des revendications 1 à 3, dans lequel le corps principal (41) de moyen d'arrêt est fixé à l'élément de réception d'impact (10) ou à la phase d'amarrage (5) par soudage ou en utilisant un élément d'attache.

5. Dispositif pare-choc (1) selon l'une quelconque des revendications 1 à 4, dans lequel l'élément tampon (20) définit un espace interne (S1) entre l'élément de réception d'impact (10) et la face d'amarrage (5), et le moyen d'arrêt (40) est agencé à l'intérieur de l'espace interne (S1).

6. Dispositif pare-choc (1) selon l'une quelconque des revendications 1 à 5, dans lequel le moyen d'arrêt (40) est configuré de manière à ne pas venir en contact avec l'élément tampon (20) quand le navire vient en contact avec l'élément de réception d'impact (10), et l'élément tampon (20) subit une déformation telle que l'élément de réception d'impact (10) forme un angle d'amarrage par conception par rapport à la face d'amarrage (5).

7. Dispositif pare-choc (1) selon l'une quelconque des revendications 1 à 6, dans lequel un rapport L1/D1 d'une longueur L1 du moyen d'arrêt (40) dans la direction normale (A1) sur un diamètre D1 d'une section transversale, qui est orthogonale à la direction normale (A1), du corps principal (41) de moyen d'arrêt est supérieur à 1.
